# EUROPÄISCHE PATENTANMELDUNG

(11) **EP 0 901 877 A2**
(43) Veröffentlichungstag der Anmeldung: **17.03.1999**
(21) Anmeldenummer: 98115924.7
(22) Anmeldetag: 24.08.1998
(51) Int. Cl.: B23Q 1/00

(54) **Drehdurchführung für Drehvorrichtungen, insbesondere für Handhabungseinrichtungen und Industrieroboter**

(30) Priorität: 05.09.1997 DE 19738934
(71) Anmelder: Fibro GmbH, D-74189 Weinsberg (DE)
(72) Erfinder: Massmann, Hans-Joachim, 74831 Gundelsheim (DE)
(74) Vertreter: Finsterwald, Manfred, Dipl.-Ing., Dipl.-Wirtsch.-Ing.

(57) **Zusammenfassung**

Drehdurchführung für Drehvorrichtungen, insbesondere für Handhabungseinrichtungen und Industrieroboter, zur Verbindung feststehender Fluidzuführungen mit Fluidleitungen eines rotierenden Elementes mit einer in einem Gehäuse (1) drehbar gelagerten Welle (2) mit mehreren axialen Fluidkanälen (8), mit einem einen insbesondere endseitig über das Gehäuse (1) überstehenden Abschnitt (10) der Welle (2) umfassenden Anschlußteil (11) zum Anschluß von Fluidleitungen, mit Ringnuten (18 bis 21) in der der Welle (2) zugewandten Innenseite des Anschlußteils (11) und/oder der dem Anschlußteil (11) gegenüberliegenden Außenseite der Welle (2), die über Querkanäle (15, 16, 31, 32) in dem umfaßten Wellenabschnitt (10) mit den axialen Fluidkanälen (8) der Welle (2) in Verbindung stehen und gegeneinander abgedichtet sind, wobei zur Reduzierung der Herstellungskosten und Verringerung der Baugröße, insbesondere in Achsrichtung (I) der Welle (2), der von dem Anschlußteil (11) umfaßte Wellenabschnitt (10) eine radiale Erweiterung (17) aufweist, durch welche mindestens ein Teil der Querkanäle (15, 16) geführt ist.

## Beschreibung

Die vorliegende Erfindung betrifft eine Drehdurchführung für Drehvorrichtung, insbesondere für Handhabungseinrichtungen und Industrieroboter, zur Verbindung feststehender Fluidzuführungen mit Fluidleitungen eines rotierenden Elementes mit einer in einem Gehäuse drehbar gelagerten Welle mit mehreren axialen Fluidkanälen, mit einem einen insbesondere endseitig über das Gehäuse überstehenden Abschnitt der Welle umfassenden Anschlußteil zum Anschluß von Fluidleitungen, mit Ringnuten in der der Welle zugewandten Innenseite des Anschlußteils und/oder der dem Anschlußteil gegenüberliegenden Außenseite der Welle, die über Querkanäle in dem umfaßten Wellenabschnitt mit den axialen Fluidkanälen der Welle in Verbindung stehen und gegeneinander abgedichtet sind.

Drehvorrichtungen dieser Art dienen beispielsweise dazu, hydraulisch oder pneumatisch betätigte Greifer von Industrierobotern drehbar zu lagern. Die Welle dient dabei einerseits als Drehlager und andererseits der Zuführung des hydraulischen oder pneumatischen Mediums zur Betätigung des Greifers. Über das Anschlußteil wird die Verbindung mischen den mit der Welle rotierenden axialen Fluidkanälen in der Welle und den außenliegenden feststehenden Fluidleitungen hergestellt.

Nachteilig sind hierbei der verhältnismäßig große Platzbedarf herkömmlicher Drehdurchführungen sowie deren hohe Herstellungskosten.

Der Erfindung liegt die Aufgabe zugrunde, eine Drehdurchführung der eingangs genannten Art anzugeben, die einen geringen Platzbedarf aufweist und kostengünstig in der Herstellung ist.

Diese Aufgabe wird dadurch gelöst, daß der vom Anschlußteil umfaßte Wellenabschnitt eine radiale Erweiterung aufweist, durch welche mindestens ein Teil der Querkanäle geführt ist.

Durch die radiale Erweiterung des vom Anschlußteil umfaßten Wellenabschnitts wird die Grenzfläche zwischen Welle und Anschlußteil ohne Verlängerung der Welle in axialer Richtung vergrößert. Bei gleicher axialer Länge können daher mehr Querkanäle untergebracht und somit ein Verteiler mit höherer Fluidkanalzahl erhalten werden. Entsprechend kann bei gleicher Fluidkanalzahl die axiale Länge der Drehdurchführung verringert werden. Hierdurch verringern sich zugleich die Herstellungskosten der Drehdurchführung.

Ein weiterer Vorteil der erfindungsgemäßen Drehdurchführung besteht darin, daß auch die radiale Baugröße gering gehalten werden kann, da das Anschlußteil nur in einem Bereich der Welle, insbesondere einem Endbereich, angeordnet werden kann. In den verbleibenden Wellenbereichen können die übrigen erforderlichen Baugruppen wie Wellenlager und Wellendrehvorrichtung angeordnet werden. Dies eröffnet auch die Möglichkeit, in der Welle einen großen zentralen Raum freizuhalten, der zur Durchführung von elektrischen Anschlußkabeln verwendet werden kann.

Nach einer Ausgestaltung der Erfindung ist die radiale Erweiterung der Welle als ringförmiger, im Querschnitt im wesentlichen insbesondere quadratischer Wulst ausgebildet. Die Herstellung der radialen Erweiterung wird hierdurch vereinfacht.

Nach einer weiteren Ausgestaltung der Erfindung münden die durch die radiale Erweiterung geführten Querkanäle jeweils in einem Eckbereich des Ring-Wulstes. Bevorzugt ist der Ring-Wulst dabei in den Mündungsbereichen der Querkanäle quer zur Längsrichtung des Querkanals abgeflacht ausgebildet. Die Anordnung der Mündungen in den Eckbereichen des Ringwulstes ermöglicht eine gute Verteilung der Querkanäle bei gleichzeitig sehr geringer axialer Länge der Drehdurchführung. Durch die Abflachung werden dabei ausreichende Durchfluß-Querschnitte für das Fluid gewährleistet.

Die Querkanäle sind insbesondere schräg durch die ringförmige Erweiterung geführt. Dies ist herstellungstechnisch vorteilhaft. Es können zwei, drei oder mehr Querkanäle schräg durch die radiale Erweiterung geführt sein. Die Querkanäle weisen dabei unterschiedliche Winkel gegenüber der Wellenachse auf, bei zwei Querkanälen sind diese insbesondere gegensinnig schräg durch die radiale Erweiterung geführt. Durch diese Ausgestaltungen ergibt sich eine gute Verteilung der Querkanäle und damit ein geringer axialer Platzbedarf.

Nach einer weiteren Ausgestaltung der Erfindung sind vier durch die Erweiterung geführte Querkanäle vorgesehen, die vom Anschluß an den axialen Fluidkanal aus jeweils zunächst radial nach außen und anschließend schräg von der Wellenachse weg oder auf die Wellenachse zu geführt sind, so daß in jedem Eckbereich der radialen Erweiterung ein Querkanal mündet. Auch hierdurch ist eine besonders gute Verteilung der Querkanäle und damit eine geringe axiale Länge erreichbar.

Nach einer weiteren Ausgestaltung der Erfindung ist das die Welle umfassende Anschlußteil aus mindestens zwei axial hintereinander angeordneten Scheiben aufgebaut. Die beiden Scheiben umfassen dabei jeweils bevorzugt eine Hälfte der radialen Erweiterung der Welle. Die Herstellung des Anschlußteils kann hierdurch vereinfacht und rationalisiert werden. Insbesondere wenn die Scheiben gemäß einer weiteren Ausgestaltung der Erfindung untereinander gleich ausgebildet und um 180° verdreht auf der Welle montierbar sind, werden die Herstellungskosten weiter deutlich gesenkt.

Es können auch drei oder mehr Scheiben vorgesehen sein, von denen zwei untereinander gleich ausgebildet und um 180° verdreht auf der Welle montierbar sind, wobei die übrigen Scheiben zwischen diesen beiden Scheiben angeordnet sind. Diese Ausgestaltung ist insbesondere für Drehdurchführungen mit mehr als vier Fluidkanälen vorteilhaft.

Nach einer weiteren Ausgestaltung der Erfindung, die auch für sich beansprucht wird, ist der vom Anschlußteil umfaßte Abschnitt der Welle als separates Bauteil ausgebildet. Für Drehdurchführungen mit unterschiedlicher Anzahl von Fluidkanälen kann somit ein und dieselbe Welle verwendet werden. Es müssen lediglich das Anschlußteil und das von diesem umfaßte separate Bauteil ausgewechselt werden. Die Herstellungskosten werden hierdurch weiter gesenkt.

Besonders bevorzugt ist es dabei, wenn die Welle nach einer weiteren Ausgestaltung der Erfindung mit der maximalen Anzahl von möglichen Axialkanälen versehen ist. Die Welle kann dadurch für alle möglichen Drehdurchführungen einer Baureihe verwendet werden. Die maximale Kanalzahl wird insbesondere durch den Durchmesser der Welle, den Kanalquerschnitt und die übrigen platzbeanspruchenden Bauelemente wie Verschraubungen bestimmt.

Ausführungsbeispiele der Erfindung sind in der Zeichnung dargestellt und werden nachfolgend beschrieben. Es zeigen, jeweils in schematischer Darstellung,
- Fig. 1: eine Drehdurchführung mit Vierfachverteilung,
- Fig. 2: eine Drehdurchführung mit Sechsfachverteilung,
- Fig. 3a + Fig. 3b: zwei weitere Varianten von Drehdurchführungen mit Vierfachverteilung, und
- Fig. 4: eine Variante der Drehdurchführung von Fig. 1.

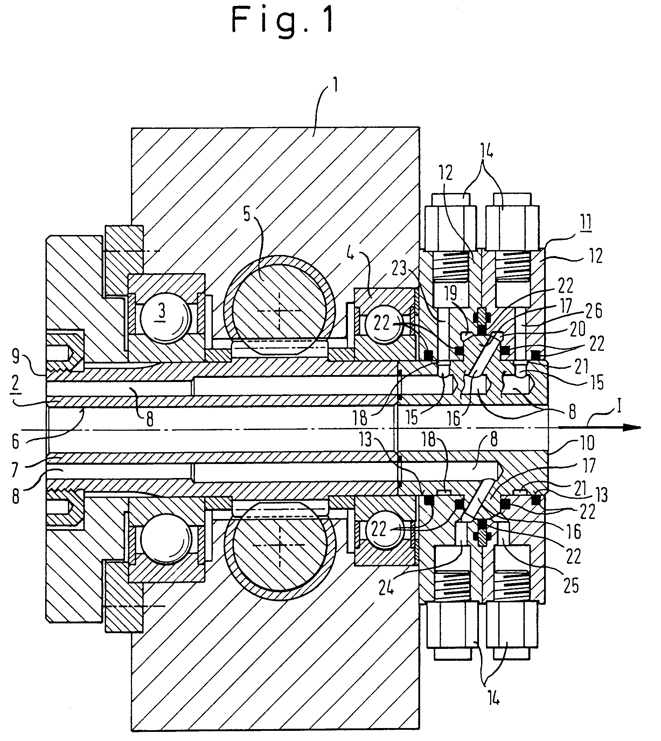

Die in Fig. 1 dargestellte Drehdurchführung umfaßt eine in einem Gehäuse 1 angeordnete Welle 2, die mittels Lagern 3 und 4 um ihre Längsachse I drehbar gelagert ist. Über eine nicht im einzelnen dargestellte Antriebsvorrichtung 5 kann eine Verdrehung der Welle 2 bewirkt werden.

Die Welle 2 ist als Hohlzylinder mit einer zentralen Ausnehmung 6 und einem Zylindermantel 7 ausgebildet. Im Zylindermantel 7 sind vier axiale Fluidkanäle 8 vorhanden, die im wesentlichen zueinander parallel verlaufen und um die zentrale Ausnehmung 6 verteilt angeordnet sind. An das eine über das Gehäuse 1 axial überstehende Ende 9 der Welle 2 ist eine hydraulische oder pneumatische Betätigungsvorrichtung, beispielsweise ein Greifer, in bekannter Weise angeschlossen, wobei die Fluidleitungen der hier nicht dargestellten Betätigungsvorrichtung mit jeweils einem Fluidkanal 8 der Welle 2 verbunden sind.

An dem anderen über das Gehäuse 1 axial überstehenden Ende 10 der Welle 2 ist ein Anschlußteil 11 angeordnet, welches das überstehende Ende 10 der Welle 2 ringförmig umschließt. Wie dargestellt, ist das von dem Anschlußteil 11 umfaßte Ende 10 der Welle 2 als separates Bauteil ausgebildet, welches mit der übrigen Welle 2 beispielsweise durch Schrauben drehfest verbunden ist.

Der Anschlußteil 11 ist aus zwei untereinander gleichen Scheiben 12 zusammengesetzt, die jeweils eine zu dem Ende 10 der Welle 2 reziproke zentrale Ausnehmung 13 aufweisen, wobei die beiden Scheiben 12 jedoch um 180° gegeneinander verdreht miteinander verbunden sind. Umfangseitig weisen die beiden Scheiben 12 jeweils zwei radial nach außen weisende Anschlußstutzen 14 für Fluidleitungen, beispielsweise Hydraulik- oder Pneumatikschläuche, auf.

Die Fluidkanäle 8 der Welle 2 enden in dem Ende 10 der Welle 2 blind und sind dort an Querkanäle 15 und 16 angeschlossen, die auf der Außenseite des Zylindermantels 7 münden. Während zwei Fluidkanäle 8 an radiale Querkanäle 15 angeschlossen sind, sind die beiden anderen Fluidkanäle 8 mit schrägen Querkanälen 16 verbunden. Die schrägen Querkanäle 16 erstrecken sich dabei ausgehend von den axialen Fluidkanälen 8 der Welle 2 in eine radiale Erweiterung des Endes 10 der Welle 2 in Form eines Ringwulstes 17. Der Ringwulst 17 weist im wesentlichen quadratischen Querschnitt auf, wobei jedoch die beiden radial äußeren Ecken schräg abgeschnitten sind. In diesen beiden schrägen Bereichen des Ringwulstes 17 mündet je einer der beiden schrägen Querkanäle 16, und zwar im wesentlichen senkrecht zur Schrägfläche.

In den Mündungsbereichen der Querkanäle 15 und 16 sind auf der Außenseite des Wellenendes 10 und auf der Innenseite des Anschlußteils 11 umlaufende Ringnuten 18, 19, 20 und 21 vorgesehen, die untereinander durch Ringdichtungen 22 fluiddicht getrennt sind. An diese Ringnuten 18 bis 21 angeschlossen sind vier in den Anschlußteil 11 eingebrachte Fluidkanäle 23, 24, 25 und 26, die andererseits jeweils mit einem der Anschlußstutzen 14 verbunden sind. Auf diese Weise sind also vier voneinander getrennte Fluidleitungen von den Anschlußstutzen 14 durch den Anschlußteil 11 über das Endstück 10 der Welle 2 und durch den verbleibenden Teil der Welle 2 zu der an dem anderen Ende der Welle 2 vorhandenen, hier nicht dargestellten Betätigungsvorrichtung geführt.

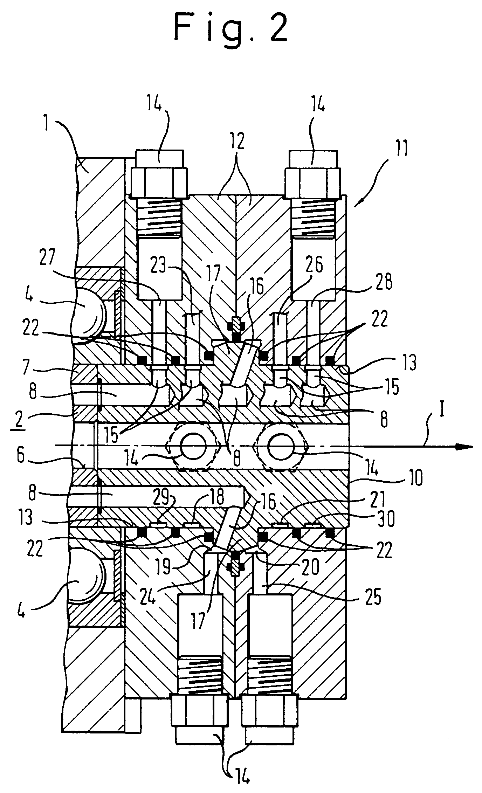

Die in Fig. 2 dargestellte Variante einer erfindungsgemäßen Drehdurchführung stimmt mit der Variante von Fig. 1 weitgehend überein. Abweichend von der Variante von Fig. 1 sind hier jedoch sechs axiale Fluidkanäle 8 im Zylindermantel 7 der Welle 2 angeordnet, die über vier radiale Querkanäle 15 und zwei schräge Querkanäle 16 mit zugeordneten Kanälen 23 bis 28 im Anschlußteil 11 verbunden sind, die ihrerseits mit sechs Anschlußstutzen 14 in Verbindung stehen. Die schrägen Querkanäle 16 münden auch bei dieser Variante in radial äußeren Eckbereichen des Ringwulstes 17. Außerdem sind entsprechend der Anzahl der Fluidkanäle 23 bis 28 im Endstück 10 der Welle 2 und im Anschlußteil 11 sechs Ringnuten 18 bis 21, 29 und 30 vorgesehen. Im übrigen besteht der Anschlußteil 11 auch hier aus zwei Scheiben 12, die untereinander gleich ausgebildet und um 180° gegeneinander verdreht miteinander verbunden sind. Das Ende 10 der Welle 2 ist wiederum als separates Bauteil ausgebildet und mit dem übrigen Teil der Welle 2 insbesondere über Schrauben drehfest verbunden. Die dargestellte Drehdurchführung stellt also einen Sechsfachverteiler dar.

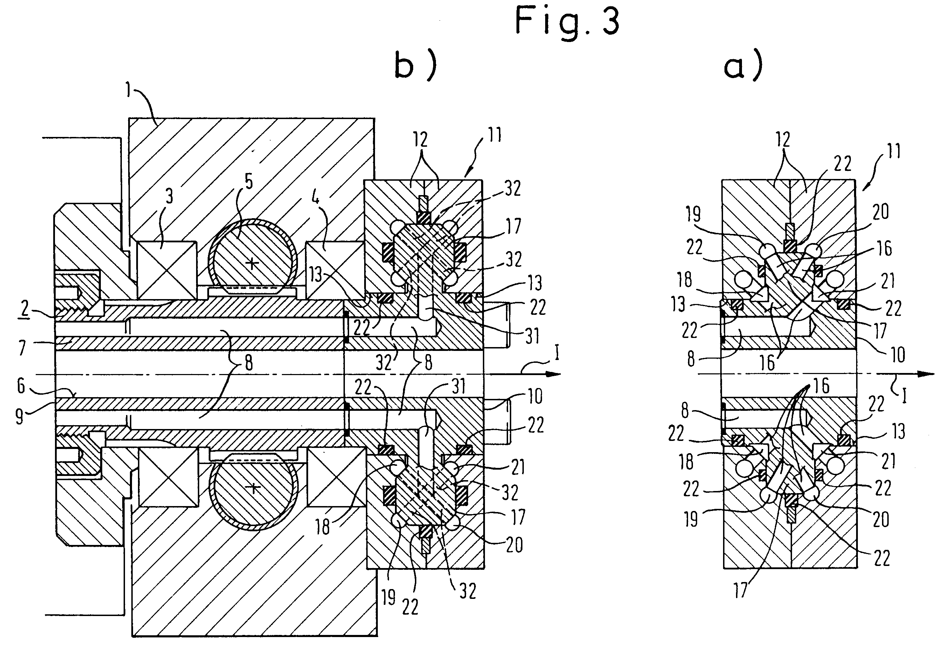

Fig. 3 zeigt zwei weitere Varianten eines Vierfachverteilers. Bei der in Fig. 3a dargestellten Variante sind alle vier Querkanäle als schräge Querkanäle 16 ausgebildet und durch den Ringwulst 17 geführt. Die schrägen Querkanäle 16 münden dabei jeweils in einer der vier Eckbereiche des Ringwulstes 17, also in den beiden radial entfernten Eckbereichen und in den beiden Übergangsbereichen zwischen Ringwulst 17 und Wellenendstück 10. Auch hier sind die Eckbereiche senkrecht zur Längserstreckung der Querkanäle 16 abgeflacht ausgebildet, um einen möglichst großen Durchgangsquerschnitt zu erreichen.

Bei der in Fig. 3b dargestellten Variante verlaufen die Querkanäle zunächst als radiale Querkanäle 31 und anschließend als schräge Querkanäle 32 durch den Ringwulst 17, wobei die schrägen Querkanäle 32 untereinander jeweils in unterschiedlichen Richtungen gegenüber der Wellenachse I geneigt sind. Auch hier münden die schrägen Querkanäle 32 jeweils in einem der vier Eckbereiche des Ringwulstes 17, so daß sich eine optimale Platzausnutzung und dadurch eine geringe axiale Länge der Drehdurchführung ergibt. Außerdem sind auch hier die Eckbereiche senkrecht zu den schrägen Querkanälen 32 abgeflacht ausgebildet.

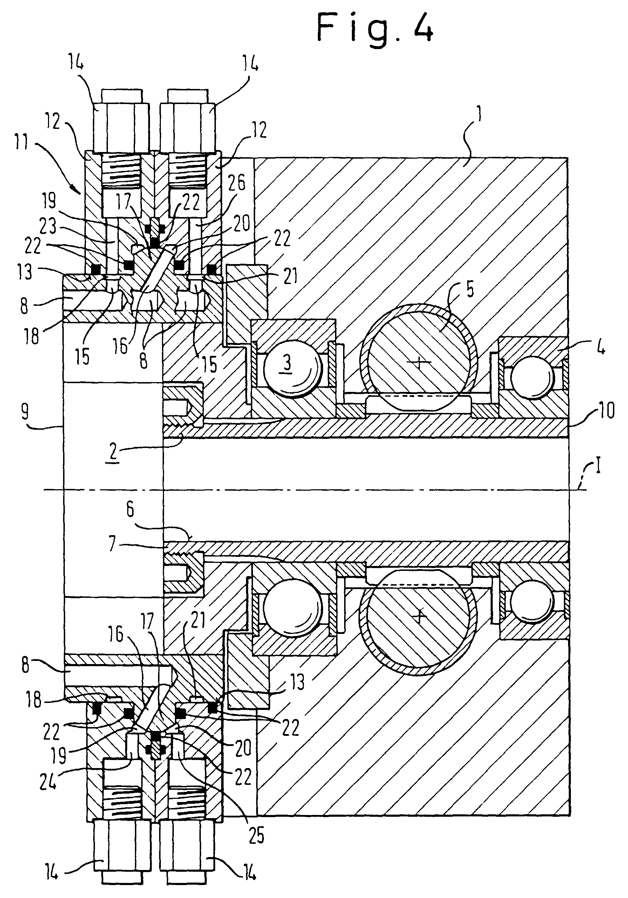

Die in Fig. 4 dargestellte Variante einer erfindungsgemäßen Drehdurchführung stimmt grundsätzlich mit derjenigen von Fig. 1 überein, es handelt sich also auch um eine Vierfachdrehdurchführung. Im Gegensatz zu der Variante von Fig. 1 ist hier jedoch der Anschlußteil 11 an dem in Fig. 4 linken Ende 9 der Welle 2 angeordnet. Dies ist das dem nicht dargestellten rotierenden Element benachbarte Ende der Welle 2. Bei der Variante von Fig. 1 ist der Anschlußteil 11 also auf der dem rotierenden Element abgewandten Seite angeordnet. Grundsätzlich können aber auch an beiden Enden 9 und 10 der Welle 2 Anschlußteile 11 vorgesehen sein, um mehr Platz zum Anschluß feststehender Anschlußleitungen zur Verfügung zu stellen. Bei einem Achtfachverteiler können also beispielsweise an dem linken Wellenende 9 vier Anschlußstutzen 14 und an dem rechten Wellenende 10 ebenfalls vier Anschlußstutzen 14 vorgesehen sein.

Wie man in Fig. 4 sieht, ist das von dem Anschlußteil 11 umfaßte Ende 9 der Welle 2 ebenfalls als separates Bauteil ausgebildet. Dieses separate Bauteil 9 ist dabei gegenüber der übrigen Welle 2 radial erweitert, um die Fluidkanäle 8 radial weiter nach außen zu verlagern und dadurch einen größeren axialen Freiraum zu schaffen. Wenn nur an dem Ende 9 der Welle 2 ein Anschlußteil 11 vorgesehen ist, weist der übrige Teil der Welle 2 keine Axialkanäle auf, so daß die Welle 2 mit einer großen zentralen Ausnehmung 6 ausgebildet werden kann. Über die gesamte Wellenlänge kann somit ein großer axialer Freiraum geschaffen werden, der beispielsweise zur Durchführung von Kabeln verwendet werden kann.

Die erfindungsgemäße Drehdurchführung zeichnet sich durch einen einfachen Aufbau aus und ist daher kostengünstig herstellbar. Durch die durch den Ringwulst 17 geführten schrägen Querkanäle 16, 32 wird der Platzbedarf in axialer Richtung der Welle 2 verringert. Es können daher auch Drehdurchführungen mit einer großen Anzahl von Fluidkanälen 8 hergestellt werden, die eine geringe Baugröße aufweisen. Eine weitere Kostenreduzierung ergibt sich durch die Verwendung von untereinander gleichen Scheiben 12 für den Anschlußteil 11 der Drehdurchführung.

### Bezugszeichenliste

- 1: Gehäuse
- 2: Welle
- 3: Lager
- 4: Lager
- 5: Wellenantrieb
- 6: zentrale Ausnehmung
- 7: Zylindermantel
- 8: Fluidkanal
- 9: erstes Ende von 2
- 10: zweites Ende von 2
- 11: Anschlußteil
- 12: Scheibe
- 13: Ausnehmung
- 14: Anschlußstutzen
- 15: Querkanal
- 16: Querkanal
- 17: Ringwulst
- 18: Ringnut
- 19: Ringnut
- 20: Ringnut
- 21: Ringnut
- 22: Ringdichtung
- 23: Fluidkanal
- 24: Fluidkanal
- 25: Fluidkanal
- 26: Fluidkanal
- 27: Fluidkanal
- 28: Fluidkanal
- 29: Ringnut
- 30: Ringnut
- 31: Querkanal
- 32: Querkanal
- I: Wellenachse

## Patentansprüche

1. Drehdurchführung für Drehvorrichtungen, insbesondere für Handhabungseinrichtungen und Industrieroboter, zur Verbindung feststehender Fluidzuführungen mit Fluidleitungen eines rotierenden Elementes mit einer in einem Gehäuse (1) drehbar gelagerten Welle (2) mit mehreren axialen Fluidkanälen (8), mit einem einen insbesondere endseitig über das Gehäuse (1) überstehenden Abschnitt (10) der Welle (2) umfassenden Anschlußteil (11) zum Anschluß von Fluidleitungen, mit Ringnuten (18 bis 21) in der der Welle (2) zugewandten Innenseite des Anschlußteils (11) und/oder der dem Anschlußteil (11) gegenüberliegenden Außenseite der Welle (2), die über Querkanäle (15, 16, 31, 32) in dem umfaßten Wellenabschnitt (10) mit den axialen Fluidkanälen (8) der Welle (2) in Verbindung stehen und gegeneinander abgedichtet sind,
dadurch **gekennzeichnet,**
daß der vom Anschlußteil (11) umfaßte Wellenabschnitt (10) eine radiale Erweiterung (17) aufweist, durch welche mindestens ein Teil der Querkanäle (15, 16, 31, 32) geführt ist.

2. Drehdurchführung nach Anspruch 1,
dadurch **gekennzeichnet,**
daß die radiale Erweiterung (17) der Welle (2) als ringförmiger, im Querschnitt im wesentlichen insbesondere rechteckiger oder quadratischer Ringwulst ausgebildet ist.

3. Drehdurchführung nach Anspruch 2,
dadurch **gekennzeichnet,**
daß die durch die radiale Erweiterung (17) geführten Querkanäle (16, 31, 32) in einem Eckbereich des Ringwulstes (17) münden, wobei der Ringwulst (17) in den Mündungsbereichen der Querkanäle (16, 32) quer zur Längserstreckung der Querkanäle (16, 32) vorzugsweise abgeflacht ausgebildet ist.

4. Drehdurchführung nach einem der vorhergehenden Ansprüche,
dadurch **gekennzeichnet,**
daß die Querkanäle (16, 32) schräg durch die radiale Erweiterung (17) geführt und vorzugsweise zwei Querkanäle (16) gegensinnig schräg durch die radiale Erweiterung (17) geführt sind.

5. Drehdurchführung nach Anspruch 4,
dadurch **gekennzeichnet,**
daß drei oder mehr Querkanäle (16) unter verschiedenen Winkeln gegenüber der Wellenachse (I) durch die radiale Erweiterung (17) geführt sind.

6. Drehdurchführung nach Anspruch 4,
dadurch **gekennzeichnet,**
daß vier durch die radiale Erweiterung (17) geführte Querkanäle (31, 32) vorgesehen sind, die vom Anschluß an den axialen Fluidkanal (8) aus jeweils zunächst radial nach außen und anschließend schräg von der Wellenachse (I) weg oder auf die Wellenachse (I) zu geführt sind, so daß in jedem Eckbereich der radialen Erweiterung (17) ein Querkanal (31, 32) mündet.

7. Drehdurchführung nach einem der vorhergehenden Ansprüche,
dadurch **gekennzeichnet,**
daß der die Welle (2) umfassende Anschlußteil (11) aus mindestens zwei axial hintereinander angeordneten Scheiben (12) aufgebaut ist und vorzugsweise zwei Scheiben (12) vorgesehen sind, die jeweils eine Hälfte der radialen Erweiterung (17) der Welle (2) umfassen.

8. Drehdurchführung nach Anspruch 7,
dadurch **gekennzeichnet,**
daß die Scheiben (12) untereinander gleich ausgebildet und um 180° gegeneinander verdreht auf der Welle (2) montierbar sind.

9. Drehdurchführung nach Anspruch 8,
dadurch **gekennzeichnet,**
daß drei oder mehr Scheiben (12) vorgesehen sind, von denen zwei untereinander gleich und um 180° gegeneinander verdreht auf der Welle (2) montierbar sind, und daß die übrigen Scheiben zwischen diesen beiden Scheiben (12) angeordnet sind.

10. Drehdurchführung für Drehvorrichtungen, insbesondere für Handhabungseinrichtungen und Industrieroboter, zur Verbindung feststehender Fluidzuführungen mit Fluidleitungen eines rotierenden Elementes mit einer in einem Gehäuse (1) drehbar gelagerten Welle (2) mit mehreren axialen Fluidkanälen (8), mit einem einen insbesondere endseitig über das Gehäuse (1) überstehenden Abschnitt (10) der Welle (2) umfassenden Anschlußteil (11) zum Anschluß von Fluidleitungen, mit Ringnuten (18 bis 21) in der der Welle (2) zugewandten Innenseite des Anschlußteils (11) und/oder der dem Anschlußteil (11) gegenüberliegenden Außenseite der Welle (2), die über Querkanäle (15, 16, 31, 32) in dem umfaßten Wellenabschnitt (10) mit den axialen Fluidkanälen (8) der Welle (2) in Verbindung stehen und gegeneinander abgedichtet sind, insbesondere nach einem der vorhergehenden Ansprüche,
dadurch **gekennzeichnet,**
daß der vom Anschlußteil (11) umfaßte Abschnitt (10) der Welle (2) als separates Bauteil ausgebildet ist.

11. Drehdurchführung nach Anspruch 10,
dadurch **gekennzeichnet,**
daß die Welle (2) mit der maximalen Anzahl von möglichen Axialkanälen (8) versehen ist.

12. Drehdurchführung nach einem der vorhergehenden Ansprüche,
dadurch **gekennzeichnet,**
daß an dem vom rotierenden Element entfernten Ende (10) der Welle (2) ein Anschlußteil (11) und/oder an dem dem rotierenden Element benachbarten Ende (9) der Welle (2) ein Anschlußteil (11) vorgesehen ist, wobei vorzugsweise das vom Anschlußteil (11) umfaßte Ende (9) der Welle (2) gegenüber der übrigen Welle (2) radial erweitert ist.
